# EUROPEAN PATENT SPECIFICATION

(11) **EP 2 585 215 B1**
(45) Date of publication and mention of the grant of the patent: **27.09.2017**
(21) Application number: 11736272.3
(22) Date of filing: 17.06.2011
(51) Int. Cl.: B01J 27/26, B01J 35/00, B01J 37/06, C08G 65/26

(54) **MODIFIED DOUBLE METAL CYANIDE CATALYSTS, PROCESS FOR THE PREPARATION BY TREATMENT OF CRYSTALLINE DMC CATALYST WITH BRONSTED ACID AND USE THEREOF**
MODIFIZIERTE DOPPELMETALL-ZYANIDKATALYSATOREN, HERSTELLUNGSVERFAHREN DURCH DIE BEHANDLUNG EINES KRISTALLINEN DMC-KATALYSATORS MIT BRÖNSTED-SÄURE UND VERWENDUNG
CATALYSEURS MODIFIÉS DE TYPE DOUBLE CYANURE MÉTALLIQUE (DMC), PROCÉDÉ DE SYNTHÈSE PAR TRAITEMENT D'UN CATALYSEUR DE TYPE DMC CRISTALLIN PAR UN ACIDE DE BRØNSTED ET LEURS APPLICATIONS

(30) Priority: 23.06.2010 WO PCT/CN2010/074322
(43) Date of publication of application: 01.05.2013
(73) Proprietor: BASF SE, 67056 Ludwigshafen am Rhein (DE)
(72) Inventor: SHISHKOV, Igor, 68165 Mannheim (DE); ZARBAKHSH, Sirus, Honk Kong Pok Fu Lam (CN); LÖFFLER, Achim, 67346 Speyer (DE); ROHDE, Wolfgang, 67346 Speyer (DE); XINHONG, Zhang, 310027 Hangzhou (CN)
(74) Representative: BASF IP Association
(86) International application number: PCT/EP2011/003014
(87) International publication number: WO 2011/160797

(56) References cited:
- WO-A1-01/03831
- CN-A- 101 085 829
- US-A- 4 472 560
- US-A- 6 063 897
- US-B1- 6 303 833

## Description

### Field of the Invention

The invention relates to a method for the preparation of double metal cyanide (DMC) catalysts which are used in the production of polyether polyols and the DMC catalysts obtained. The DMC catalysts show enhanced performance in alkoxylation reactions, so that lower concentrations of the DMC catalyst can be used in polyether polyol production.

### Background of the Invention

Polyether polyols are important intermediates utilized to manufacture a wide range of products, including polyurethanes. Polyether polyols are produced by polymerization of epoxides, e.g., propylene or ethylene oxide. It is known that double metal catalysts (DMC catalysts) are effective polymerization catalysts, producing polyols with narrow molecular weight distribution, low viscosity and low unsaturation.

DMC catalysts are normally prepared by combining an aqueous solution of a metal salt and an aqueous solution of a complex metal cyanide salt. For example, U.S. Patents Nos. 5,470,813 and 5,714,639 describe preparation of DMC by combining an aqueous solution of ZnCl₂ (excess) with an aqueous solution of K₃Co(CN)₆. The desired DMC catalyst, in this case specifically Zn₃[Co(CN)₆]₂, precipitates from the mixture.

US 2002/193245 A1 describes one-step preparation of DMC catalysts by combining the aqueous solution of the first metal salt, e.g. ZnCl₂, with the aqueous solution of the second metal salt, e.g. CoCl₂, and the aqueous solution of the alkali metal cyanide, e.g. KCN, in a single step to synthesize the DMC catalyst, in this case specifically Zn₃[Co(CN)₆]₂.

Other methods for DMC catalyst synthesis are described in US-A 4,472,560, US-A 4,477,589, US-A 5,627,120, US-A 5,482,908, US-A 5,789,626, US 6,376,420 B1, US 6,869,905 B1, EP 1 079 926 A1, EP 1 194 231 A1, EP 1 290 060 A1, WO 2005/094989 A1, US 2002/0177523, US 2007/0203367 A1, DE 198 09 538 A1, and WO 99/56874 A1.

Crystalline DMC catalysts are disclosed in US 6,303,833 B1, US 6,613,714 B2, US 6,689,710 B2, US 7,470,823 B2, US 2004/249221 A1, US 2005/0203274 A1, and US 2008/300376 A1.

Although DMC catalysts, for instance those described in US 6,689,710 B2 or US 2004/0249221 A1, display high activity and afford polyether polyols with low unsaturation level, various attempts have been made to further increase catalyst activity, in order to be able to use smaller catalyst concentrations in the polyol production process and avoid an increase in the viscosity of the resulting polyols at DMC catalyst concentrations below 100 ppm.

Modifications to the process of catalyst preparation include continuous preparation of crystalline DMC catalysts via a mixing nozzle (EP 1 799 344 A1), preparation of the DMC catalyst in ionic liquids (WO 2008/095853 A1), or spray-drying the catalyst (WO 2004/022227 A1).

In order to increase catalyst activity, a number of conditioning methods have been proposed. US 2004/0242937 A1 teaches conditioning of a crystalline DMC catalyst by ultrasonic irradiation, in order to effect deagglomeration of the catalyst particles. WO 03/029326 A1 describes conditioning of the DMC catalyst at 80-130°C in the reactor prior to the polymerization.

EP 1 288 244 A1 discloses a process wherein a substantially crystalline double metal cyanide catalyst is subjected to a contact treatment by heating the catalyst with an aqueous solution containing an organic ligand and a metal salt at temperatures from 45 to 125 °C, and then separating the resulting solid from the obtained slurry.

CN 1 589 966 A teaches to treat zinc chloride having higher basicity with acid to regulate its basicity to an optimal value prior to using it for DMC catalyst preparation.

US 6,077,978 A teaches to prevent DMC catalyst deactivation by addition of an acid to the vessel or to a starter compound for polyol production. The acid neutralizes basic impurities in the starter compound, so that complicated purification of the starter compound can be dispensed with. However, no information regarding the effect of the acid on the DMC catalyst was provided.

JP 5/331278 A discloses addition of acid to a polyol produced using a basic catalyst and subsequent propoxylation in the presence of a DMC catalyst without removing excess acid and salt formed, to produce a high molecular weight polyol.

EP 1 911 787 A2 describes a DMC-catalysed process for the production of polyether polyols which tolerates high water content in the low molecular weight starters. The process uses a low molecular weight starter containing 200-5,000 ppm water and acidified with from about 10 ppm to about 2,000 ppm of at least one of an inorganic protic mineral acid and an organic acid.

US 6,028,230 A discloses an epoxide polymerization process comprising reacting an epoxide and an active hydrogencontaining initiator in the presence of (a) a substantially amorphous highly active double metal cyanide complex catalyst comprised of a double metal cyanide, an organic complexing agent, and a metal salt and (b) an effective amount of a non-protic Lewis acid. The polyether polyol produced contains a reduced level of high molecular weight tail as compared to an analogous polyether polyol prepared in the absence of the non-protic Lewis acid. The method yields a product containing a reduced amount of high molecular weight impurities even at 30 ppm catalyst concentration.

WO 01/53381 A1 discloses a method for the production of polyether alcohols by catalytic addition of alkylene oxides to H-functional starting substances using a combination of at least one multi-metal cyanide compound and at least one acid compound as catalyst. This was reported to shorten catalyst induction time and lead to a higher content of primary hydroxyl groups.

WO 01/04180 A1 teaches a method for preparing metal cyanide catalysts using polycarboxylic acids. The method comprises mixing a first solution of a metal salt in an inert solvent with a second solution of a metal cyanide compound in an inert solvent in the presence of an organic polyacid. The catalysts formed are reported to have larger particle sizes than conventional metal cyanide catalysts, facilitating separation from the polyol product. Preferred organic polyacids are crosslinked or uncrosslinked polymers containing pendant carboxyl or carboxylate groups. However, the method uses expensive organic polyacids and includes multiple washing/filtration steps.

US 6,063,897 A discloses treatment of a DMC catalyst comprising zinc hydroxyl groups by reacting the catalyst with a Brønsted acid and subsequently removing at least a portion of any excess acid from the catalyst. The catalyst obtained can be used in concentrations below 100 ppm, shows shorter initiation times and yields a polyol product with lower content of high molecular weight impurities. However, the preparation of the hydroxide-containing DMC catalyst requires multiple sequences of filtration an reslurrying.

US 4,472,560 A teaches treatment of a DMC catalyst with acids and metal salts to increase catalytic activity. In Example 16, treatment of Zn₃[Co(CN)₆]₂*12-14 H₂O/ZnCl₂ with HCl/ZnSO₄ in DME resulted in an activity increase from 3.1 to 9.8 kg/g catalyst.

### Summary

It has now been found that DMC catalysts having increased activity in polyether polyol production by ring-opening polymerisation of epoxides are obtained by treating a first crystalline DMC catalyst with a Brønsted acid selected from the group consisting of hydrochloric acid, hydrobromic acid, and nitric acid, and mixtures thereof, in the presence of an organic ligand which is isopropanol.

### Detailed Description

The present invention provides a method for preparing a double metal cyanide (DMC) catalyst, comprising treating a first DMC catalyst with a Brønsted acid selected from the group consisting of hydrochloric acid, hydrobromic acid, and nitric acid, and mixtures thereof, in the presence of an organic ligand which is isopropanol The first double metal cyanide catalyst is crystalline.

The first DMC catalyst corresponds to the formula

Zn₃[Co(CN)₆]₂*Zn(OAc)₂*nH₂O (II)

In formula (II), n generally is in the range of from 1 to 24, for instance, from 7 to 9.

In one embodiment of the method of the present invention, a suspension of the first DMC catalyst in a dispersing medium is used. As the dispersing medium, water, alcohols, esters, ethers, heteroatom-containing organic ligands, e.g. Pluronic^{®} 6200, polyethers, polyesters, polyalcohols, polyetherols, propylene oxide/ethylene oxide copolymers, and/or their mixtures can be used.

In one embodiment of the process, the concentration of the DMC catalyst in the suspension is 0.05 to 90 wt.%, for instance 1 to 80 wt.%, 5 to 70 wt.%, 5 to 60 wt.% or even 10 to 60 wt.%.

In one embodiment, the DMC catalyst suspension is stirred during the process at 0 to 3,000 rpm, for instance 100 to 2,000 rpm, 200 to 1,000 rpm, or even 300 to 700 rpm.

In one embodiment, the DMC catalyst suspension is stirred during the conditioning process using a stirring power of 0 to 5 W/l, for instance, 0 to 1 W/l, 0 to 0.5 W/l, or even 0 to 0.1 W/l.

In another embodiment of the method of the present invention, the first DMC catalyst is immobilized on an inert carrier, e.g. an inorganic oxide or a silicate, or a carrier comprised of an organic polymer, e.g. polystyrene or polyurethane. In case the carrier is in the form of beads or grains, the immobilized first DMC catalyst can also be treated in suspension as described above. Alternatively, the immobilized first DMC catalyst can be treated by rinsing with a Brønsted acid selected from the group consisting of hydrochloric acid, hydrobromic acid, and nitric acid, and mixtures thereof, in the presence of an organic ligand which is isopropanol. The method of the invention involves treatment of the first DMC catalyst with a Brønsted acid selected from the group consisting of hydrochloric acid, hydrobromic acid, and nitric acid, and mixtures thereof, in the presence of an organic ligand which is isopropanol. Suitable Brønsted acids are hydrochloric acid, hydrobromic acid, nitric acid, or mixtures of these acids.

In one embodiment of the process, the concentration of the Brønsted acid used for the treatment is in the range of from 0.0001 to 12 M, for instance, 0.001 M to 12 M, or 0.1 M to 6M or even 0.01 M to 6M. The ratio of the molar acidic protons contained in the Brønsted acid used for treating the first DMC catalyst to the molar amount of all Zn atoms of the first DMC catalyst is in the range of from 1:0.00001 to 1:1000000, for instance, 1:0.001 to 1:100000, or even 1:0.01 to 1:1000.

In one embodiment of the process, the Brønsted acid is used in a molar amount which exceeds the molar amount of any metal salt M¹_{g}Xₙ present in the first DMC catalyst. In another embodiment, a stoichiometric amount of acid, relative to the molar amount of any metal salt M¹_{g}Xₙ present in the first DMC catalyst, is used. In still another embodiment, a substoichiometric amount of acid, relative to the molar amount of any metal salt M¹_{g}Xₙ present in the first DMC catalyst, is used. For instance, when the composition of the first DMC catalyst corresponds to the formula Zn₃[Co(CN)₆]₂*Zn(OAc)₂*nH₂O, the total amount of acid used may correspond to less than 2 equivalents of acid per mol of DMC catalyst, even if the process involves addition of more than one type of acid.

Isopropanol is used as the organic ligand.

In one embodiment of the process, the ligand is present in the reaction mixture before the addition of the Brønsted acid, in a concentration of from 0.01 to 100 wt.%, for instance, from 0.1 to 95 wt.%, or even 20 to 80 wt.%. Of course, the DMC compound can be resuspended in a pure ligand or mixture of ligands followed by addition of Brønsted acid. Alternatively, the ligand can be added together with a Brønsted acid, or solid DMC can be added to a mixture of an organic ligand and a Brønsted acid. Acid can be added to the reaction mixture as a solution in different concentrations, for example from 0.0001 M to 12 M, or from 0.01 M to 8 M.

The first DMC catalyst is treated at a temperature in the range of from 0 to 120°C, for instance 10 to 100°C, or even 20 to 80°C.

The first DMC catalyst is treated for a period of time in the range of from 1 min to 24 hrs, for instance in the range of from 0.5 hr to 24 hrs, or even in the range of from 1 hrs to 10 hrs.

In one embodiment of the invention, the first DMC catalyst is treated without first being isolated from the reaction mixture. The treatment process can take place immediately after the synthesis of the catalyst. In case a suitable reactor is used for the preparation of the first DMC catalyst, the treatment may even performed *in situ,* without the need to transfer the reaction mixture to another vessel first.

In another embodiment, the first DMC catalyst is isolated from the reaction mixture before the treatment with acid. As mentioned above, the DMC catalyst can be isolated by filtration or centrifugation. Conditioning may be directly performed on the wet catalyst. Alternatively, the catalyst may be dried before the conditioning process, e.g. using the drying methods mentioned above.

In one embodiment of the process, an organic ligand is added to the DMC catalyst or the DMC catalyst suspension, as the case may be, and one or more Brønsted acids are subsequently added.

After the treatment process, the DMC catalyst can be separated from the reaction mixture. Suitable methods are centrifugation, extraction with an organic solvent which is immiscible with water, decantation or filtration. In one embodiment, the catalyst is separated by filtration. The catalyst may subsequently be washed with water or organic ligands like isopropanol.

The DMC catalyst can be used in polymerisation reactions in the form of a wet filter cake or in dry form. Drying can be effected in an oven and/or under vacuum at a temperature in the range of from 30 to 120 °C, for instance 40 to 80 °C. The catalyst can also be re-suspended in an organic starter compound or water. The concentration of the catalyst in such a suspension normally is 0.01 to 90 wt.%, for instance 0.01 to 50 wt.%, 0.1 to 20 wt.%, or even 1 to 10 wt.%.

The present invention also provides a DMC catalyst obtainable by the process of the invention. The composition of the catalyst corresponds to the formula

Zn₃[Co(CN)₆]₂*[*a*Zn(OAc)₂**b*ZnX¹ₓ**c*ZnX²_{y}**d*ZnX³_{z}]*L**n*H₂O (III)

wherein
L is isopropanol;
X corresponds to chloride, bromide, or nitrate;
a, b, c, d, and n are integers or fractions greater than or equal to zero, with the proviso that at least one of b, c, and d is different from zero;
x, y and z are chosen so that the compound is electrically neutral.

In one embodiment of the invention, a is greater than zero. In another embodiment of the invention, at least two of b, c, and d are different from zero.

The DMC catalyst is crystalline.

In one embodiment of the invention, the DMC catalyst is characterized in that its XRD diagram can be indexed according to a hexagonal crystal system. The catalyst is essentially crystalline (crystallinity >40%, for instance >70%, or >90%, or even >99%, as determined by XRD).

In one embodiment of the invention, the DMC catalyst shows in its XRD diagram reflections corresponding to d-values of 6.3t0.1 Å, 5.9±0.1 Å, 4.7±0.1 Å, 3.8±0.1 A, 3.0±0.1 Å, 2.8±0.1 Å, 2.4±0.1 Å, 2.3±0.1 Å.

In another embodiment of the invention, the DMC catalyst shows in its XRD diagram reflections corresponding to d-values of 17.2±0.1 Å, 15.4±0.1 Å, 5.7±0.1 Å, 4.7±0.1 Å, 4.4±0.1 Å, 3.9±0.1 Å, 3.8±0.1 Å, 3.0±0.1 Å, 2.3±0.1 Å.

In yet another embodiment of the invention, the DMC catalyst shows in its XRD diagram reflections corresponding to d-values of 17.5±0.1 Å, 16.7±0.1 Å, 5.3±0.1 Å, 4.6±0.1 Å, 4.4±0.1 Å, 3.8±0.1 Å, 2.4±0.1 Å

In one embodiment of the invention, the dried DMC catalyst has a specific area, determined via nitrogen sorption (N₂-isotherm) according to DIN 66134, in the range of from 100 m²/g to 800 m²/g, for instance, in the range of from 130 m²/g to 650 m²/g.

In one embodiment of the invention, the dried DMC catalyst has a mean BJH pore diameter (4V/A), determined via nitrogen sorption (N₂-isotherm) according to German Standard DIN 66134, in the range of from 10 Å to 150 Å, for instance, in the range of from 20 Å to 120 Å.

In one embodiment of the invention, the dried DMC catalyst has a N₂ pore volume, determined via nitrogen sorption (N₂-isotherm) according to DIN 66134, in the range of from 0.035 to 0.26 ml/g for pore diameters in the range of from 2 to 200 nm.

In one embodiment, the zinc content of the dried DMC catalyst is 26 to 32 wt.%, or even 27 to 30 wt.%. In one embodiment the molar ratio zinc/cobalt is in the range of from 1.7 to 2.3, for instance 1.9 to 2.1.

The DMC catalyst of the present invention may be used in the polymerisation of epoxides. It may also be used in the copolymerisation of epoxides and lactones, anhydrides or carbon dioxide.

Examples of suitable lactones for the copolymerisation with epoxides are substituted or unsubstituted lactones having 4-membered or larger rings, such as β-propiolactone, δ-valerolactone, ε-caprolactone, methyl-ε-caprolactone, β,β-dimethyl-β-propiolactone, β-methyl-β-propiolactone, α-methyl-β-propiolactone, α,α-bis(chloromethyl) propiolactone, methyoxy-ε-caprolactone, ethoxy-ε-caprolactone, cyclohexyl-ε-caprolactone, phenyl-ε-caprolactone, benzyl-ε-caprolactone, ζ-enantholactone, η-caprylolactone, α,β,γ-trimethoxy-δ-valerolactone, or β-butyrolactone, and mixtures thereof. In one particular embodiment, ε-caprolactone is used.

Examples of suitable anhydrides for the copolymerisation with epoxides are cyclic anhydrides, substituted or unsubstituted, having 5-membered or larger rings, such as maleic anhydride, succinic anhydride, phthalic anhydride, itaconic anhydride, cis-1,2,3,6-tetrahydrophthalic anhydride. In one embodiment, maleic anhydride, succinic anhydride or phthalic anhydride are used. In one particular embodiment, substituted succinic anhydrides like alkenyl succinic anhydrides having carbon-chains comprising from 6 to 20 carbon atoms are used.

When the DMC catalyst of the present invention is utilised in the production of polyether polyols by ring-opening polymerisation of epoxides, it can be used at concentrations of less than 100 ppm, for example less than 75 ppm, or even 50 ppm or less, based on the total amount of polyol produced. Of course, the DMC catalyst of the present invention can also be used at concentrations >100 ppm.

The DMC catalyst of the present invention can be used to prepare polyether polyols having very high molecular weights, for instance polyether polyols having a number average molecular weight in the range of from 8,000 to 18,000 g/mol.

In comparison to the DMC catalysts used as starting materials in the process of the present invention (the first DMC catalysts), the DMC catalysts of the invention yield polyol products having lower viscosity.

It will be understood that the features mentioned above and those described hereinafter can be used not only in the combination specified but also in other combinations or on their own, without departing from the scope of the present invention.

The present invention will now be described in more detail in the examples below. It is to be understood that the examples are not intended to limit the scope of the present invention and are merely an illustration of a preferred embodiment of the invention.

### Examples

### Catalyst preparation and conditioning

### Preparation of Hexacyanocobaltic Acid:

(according to US 6,689,710 B2)

7 1 of strongly acidic ion exchange resin in the sodium form (Amberlite^{®} 252 Na, Rohm and Haas) were placed in an ion exchange column (length 1 m, volume 7.7 1). The ion exchange resin was subsequently converted into the H form by passing 10% hydrochloric acid through the ion exchange column at a rate of 2 bed volumes per hour for 9 hours, until the sodium content in the eluate was less than 1 ppm. The ion exchange resin was subsequently washed with water until neutral.

The regenerated ion exchange resin was then used for preparing an essentially alkali-free hexacyanocobaltic acid. For this purpose, a 0.24 molar solution of potassium hexacyanocobaltate in water was passed through the ion exchange resin at a rate of 1 bed volume per hour. After 2.5 bed volumes, the potassium hexacyanocobaltate solution was replaced by water. The 2.5 bed volumes obtained had a mean hexacyanocobaltic acid content of 4.5% by weight and alkali metal contents of less than 1 ppm.

The hexacyanocobaltic acid solutions used for the further examples were appropriately diluted with water.

### Catalyst A (comparative):

(according to US 6,689,710 B2)

16,000 g of aqueous hexacyanocobaltic acid (cobalt content: 9 g/l) were placed in a 30 1 stirred vessel equipped with a propeller stirrer, immersed tube for introduction of the metal salt solution, pH probe and light scattering probe and were heated to 50°C while stirring. Subsequently, while stirring at a stirring power of 0.4 W/l, 9,224 g of aqueous zinc acetate dihydrate solution (zinc content: 2.6% by weight) which had likewise been heated to 50°C were metered in over a period of 15 minutes.

The molar ratio zinc:cobalt reached at the end of the precipitation was 1.5:1. The solid present in the precipitation suspension showed an X-ray diffraction pattern which could be indexed according to the cubic crystal system.

351 g of Pluronic^{®} PE 6200 (BASF SE) were added to this suspension and the mixture was stirred for another 10 minutes.

A further 3,690 g of aqueous zinc acetate dihydrate solution (zinc content: 2.6% by weight) were subsequently metered in over a period of 5 minutes while stirring at a stirring power of 0.4 W/l.

The molar ratio zinc:cobalt at this point in time was 2.1:1, and the pH was 4.02. The suspension was stirred for another two hours. The pH dropped from 4.02 to 3.27 during this time and then remained constant. The precipitation suspension obtained in this way was subsequently filtered and the solid was washed on the filter with 6 times the cake volume of water.

The XRD pattern of the catalyst obtained displayed reflections at d-values of 8.45 Å (4%), 6.40 Å (2%), 6.16 Å (7%), 5.60 Å (5%), 5.20 Å (100%), 5.01 Å (3%), 4.80 Å (45%), 4.72 Å (7%), 4.23 Å (7%), 4.11 Å (5%), 4.05 Å (4%), 3.91 Å (9%), 3.75 Å (25%), 3.60 Å (44%), 3.46 Å (42%), 3.34 Å (5%), 3.23 Å (6%), 3.08 Å (5%), 2.82 Å (13%), 2.77 Å (15%), 2.70 Å (5%), 2.61 Å (40%), 2.40 Å (16%), 2.25 Å (16%) 2.04 Å (14%), 1.88 Å (13%), where the values in brackets represent the relative intensity of the respective reflection.

Before elemental analysis, the catalyst was dried for 16 h at 60°C under reduced pressure, losing 51.4% of its mass in the process. According to elemental analysis, the dried catalyst contained about 28 wt.% Zn and had the approximate formula Zn₃[Co(CN)₆]₂*[Zn(OAc)₂]₂*nH₂O.

### Catalyst B (comparative):

20 g of Catalyst A prepared as above were suspended in 150 ml 6M HCl, the suspension was stirred for 1 h, and the catalyst was isolated by filtration. The solids were reslurried in 300 ml water and again isolated by filtration. This washing procedure was repeated three times.

The XRD pattern of the catalyst obtained showed formation of a cubic phase with reflections at 5.93 Å (8%), 5.13 Å (100%), 3.63 Å (39%), 3.10 Å (9.2%), 2.96 Å (6.5%), 2.57 Å (66.4%), 2.36 Å (6.5%), 2.30 Å (33.8%), 2.10 Å (13.1%), 1.98 Å (8.0%), 1.81 Å (16.3%), 1.74 Å (7.3%), 1.71 Å (18.0%), 1.62 Å (17.4%), 1.57 Å (4.2%), 1.55 Å (6.0%), 1.48 Å (4.9%), 1.42 Å (8.9%), 1.37 Å (7.8%), the values in brackets representing the relative intensity of the respective reflection. Elemental analysis of the dried catalyst by AAS showed a Zn content of 26,3 wt.%., attributed to Zn₃[Co(CN)₆]₂*12 H₂O (calculated Zn content 25 wt.%).

### Catalyst C

50 g of Catalyst A prepared as above were suspended in 75 ml isopropanol, followed by addition of 375 ml 6M HCl, the suspension was stirred for 1 h, and the catalyst was isolated by filtration. The solids were reslurried in 300 ml isopropanol and again isolated by filtration. This washing procedure was repeated three times.

Before elemental analysis, the catalyst was dried for 16 h at 60°C under reduced pressure, losing 61.3% of its mass in the process. According to elemental analysis, the dried catalyst contained 28.6 wt.% Zn, 13.1 wt.% Co, 18.8 wt.% N, 7.8 wt.% Cl, 23.9 wt.% C and 2.0 wt.% H. Surprisingly, this composition is close to the formula Zn₃[Co(CN)₆]₂*ZnCl₂**y*(*iso-*C₃H₇O)**x*H₂O, indicating a complete substitution of the acetate groups in the starting material.

The XRD pattern of the undried catalyst obtained showed complete disappearance of the reflections of the untreated catalyst and formation of a new catalyst phase. The XRD pattern of the catalyst displayed reflections mainly occurring at d-values of 17.18 Å (16%), 15.35 Å (100%), 6.47 Å (10%), 6.30 Å (11%), 5.70 Å (40%), 4.65 Å (80%), 4.35 Å (22%), 3.85 Å (18%), 3.78 Å (56%), 3.68 Å (13%), 3.40 Å (12%), 3.24 Å (12%), 3.08 Å (14%), 2.95 Å (18%), 2.85 Å (15%), 2.64 Å (10%), 2.58 Å (14%), 2.42 Å (16%), 2.32 Å (17%), 2.18 Å (14%), 2.12 Å (18%), 1.89 Å (17%), the values in brackets representing the relative intensity of the respective reflection.

The XRD pattern of the dried catalyst displayed reflections mainly occurring at d-values of 6.32 Å (24%), 5.87 Å (7.8%), 4.73 Å (100%), 4.20 Å (7%), 3.75 Å (45%), 3.04 Å (14%), 2.53 (8.2%), 2.79 Å (18%), 2.36 Å (17%), 2.31 Å (17%), 1.96 Å (13%), 1.87 Å (8%), 1.60 Å (5%), 1.57 Å (5%), the values in brackets representing the relative intensity of the respective reflection. The diffraction lines in the diffractogram can be indexed with a hexagonal crystal system with lattice constants a = 7.5 ± 0.2 Å and c = 27.5 ± 0.5 Å.

The pore size distribution and specific area of the dried catalyst were determined via nitrogen sorption (N₂-isotherm) according to German Standard DIN 66134. The shape of the N₂-isotherm of the catalyst corresponded to a material with a mean BJH pore diameter (4V/A) of 22 Å and a BET surface area of 608 m²/g, with a N₂ pore volume of 0.035 ml/g for pore diameters in the range from 2 to 200 nm

### Catalyst D

7 g of Catalyst A prepared as above were suspended in 30 ml isopropanol, followed by addition of 150 ml 3M HNO₃, the suspension was stirred for 1 h, and the catalyst was isolated by filtration. The solids were reslurried in 300 ml isopropanol and again isolated by filtration. This washing procedure was repeated three times.

Before elemental analysis, the catalyst was dried for 16 h at 60°C under reduced pressure, losing 57% of its mass in the process. According to elemental analysis, the dried catalyst contained 27.5 wt.% Zn.

The XRD pattern of the undried catalyst obtained showed complete disappearance of the reflections of the untreated catalyst and formation of a new catalyst phase. The XRD pattern of the catalyst displayed reflections mainly occurring at d-values of 9.31 Å (13.4%), 5.99 Å (12.4%), 5.71 Å (24.1%), 5.49 Å (28.8%), 4.69 Å (48.8%), 4.64 Å (26.8%), 4.57 Å (100%), 4.10 Å (44.7%), 4.07 Å (19.8%), 4.02 Å (19.3%), 3.98 Å (37.2%), 3.74 Å (22.1%), 3.58 Å (15.5%), 3.55 Å (14.2%), 3.12 Å (11.8%), 2.87 Å (11.6%), 2.68 Å (17.2%), 2.54 Å (12.3%), 2.43 Å (10.5%), 2.41 Å (11.9%), 2.37 Å (10.3%), 2.36 Å (19%), 2.31 Å (14.2%), 2.29 Å (18.3%), 2.13 Å (26.4%), 2.11 Å (9.2%), the values in brackets representing the relative intensity of the respective reflection.

### Catalyst E

20 g of Catalyst A prepared as above were suspended in 55 ml isopropanol, followed by addition of 210 ml 0.1M HCl, the suspension was stirred for 1 h, and the catalyst was isolated by filtration. The solids were reslurried in 300 ml isopropanol and again isolated by filtration. This washing procedure was repeated three times.

Before elemental analysis, the catalyst was dried for 16 h at 60°C under reduced pressure, losing 63.6% of its mass in the process. According to elemental analysis, the dried catalyst contained 27.3 wt.% Zn and 1.1 wt.% Cl. These results suggest that probably not all the acetate groups were substituted by Cl atoms and, deduced from the Zn:Cl ratio, the catalyst formula is close to Zn₃[Co(CN)₆]₂*[Zn(OAc)₂]_{0.85}*[ZnCl₂]_{0.15}*x(H₂O)*y(*i*PrOH).

The XRD pattern of the undried catalyst displayed reflections mainly occurring at d-values of 14.92 Å (12%), 6.31 Å (10.5%), 6.05 Å (11.5%), 5.78 Å (23.8%), 5.56 Å (23.8%), 5.48 Å (11%), 5.30 Å (25.6%), 4.75 Å (92.6%), 4.69 Å (16.3%), 4.61 Å (100%), 4.25 Å (36.2%), 4.18 Å (17.8%), 4.14 Å (55.2%), 4.09 Å (13.4%), 4.06 Å (19.3%), 4.02 Å (45.9%), 3.98 Å (9.7%), 3.80 Å (30.8%), 3.77 Å (17.9%), 3.61 Å (14.3%), 3.58 Å (15.3%), 3.14 Å (17.9%), 3.03 Å (11.6%), 2.89 Å (20.5%), 2.70 Å (12.7%), 2.55 Å (17.2%), 2.44 Å (17.5%), 2.43 Å (16%), 2.39 Å (10.1%), 2.37 Å (28,1%), 2.30 Å (16.3%), 2.14 Å (28.7%), 2.12 Å (12%), 2.07 Å (12.2%), 1.95 Å (9.4%), 1.93 Å (9%), 1.90 Å (10.8%), the values in brackets representing the relative intensity of the respective reflection.

### Catalyst F

20 g of Catalyst A prepared as above were suspended in 55 ml isopropanol, followed by addition of 5.8 ml 1M HCl and 5.8 ml 1M HBr, the suspension was stirred for 1 h, and the catalyst was isolated by filtration. The solids were reslurried in 300 ml isopropanol and again isolated by filtration. This washing procedure was repeated three times.

Before elemental analysis, the catalyst was dried for 16 h at 60°C under reduced pressure, losing 40.1% of its mass in the process. According to elemental analysis, the dried catalyst contained 29.1 wt.% Zn, 0.49 wt.% Cl and 0.04 wt.% Br. These results suggest that probably not all the acetate groups were substituted by Cl atoms and, deduced from the Zn:Cl:Br ratio, the catalyst composition is close to the formula

Zn₃[Co(CN)₆]₂*[Zn(OAc)₂]_{0.92}*(ZnCl₂)_{0.06}*(ZnBr₂)_{0.02}*xH₂O*Y *i*PrOH

The XRD pattern of the undried catalyst displayed reflections mainly occurring at d-values of 9.35 Å (16.9%), 6.00 Å (11.7%), 5.73 Å (27.1%), 5.51 Å (27%), 5.21 Å (15.7%), 4.79 Å (16.6%), 4.70 Å (60.3%), 4.64 Å (24.9%), 4.58 Å (100%), 4.49 Å (10.9%), 4.11 Å (41.5%), 3.99 Å (34.4%), 3.74 Å (29.5%), 3.59 Å (23.1%), 3.55 Å (13.8%), 3.46 Å (11.7%), 3.12 Å (10.7%), 2.87 Å (13.5%), 2.69 Å (12.1%), 2.68 Å (15.5%), 2.61 Å (11.8%), 2.54 Å (11.9%), 2.41 Å (15%), 2.38 Å (12.2%), 2.36 Å (20.6%), 2.31 Å (11.6%), 2.30 Å (17.3%), 2.13 Å (28.8%), 2.11 Å (9.9%), 1.89 Å (10%), 1.88 Å (9.2%), 1.66 Å (9.3%), the values in brackets representing the relative intensity of the respective reflection.

### Catalyst G

20 g of Catalyst A prepared as above were suspended in 30 ml isopropanol, followed by addition of 150 ml 3M HBr, the suspension was stirred for 1 h, and the catalyst was isolated by filtration. The solids were reslurried in 300 ml isopropanol and again isolated by filtration. This washing procedure was repeated three times.

Before elemental analysis, the catalyst was dried for 16 h at 60°C under reduced pressure, losing 53.6% of its mass in the process. According to elemental analysis, the dried catalyst contained 25.8 wt.% Zn, 11.5% Co, 1.7% H, 16.8% N, 18.9% C and 15.7% Br. The Zn:Co:Br ratio deduced from the elemental composition can be attributed to a formula Zn₃[Co(CN)₆]₂*ZnBr₂*n(ⁱPrOH)*m(H₂O).

The XRD pattern of the undried catalyst obtained showed complete disappearance of the reflections of the untreated catalyst and formation of a new catalyst phase. The XRD pattern of the catalyst displayed reflections mainly occurring at d-values of 17.53 Å (57.3%), 16.73 Å (23.6%), 15.90 Å (11.9%), 6.12 Å (13.1%), 5.68 Å (12.3%), 5.30 Å (20.2%), 4.63 Å (29.4%), 4.53 Å (34.8%), 4.44 Å (48.7%), 3.76 Å (100.0 %), 3.69 Å (15.2%), 3.17 Å (10.6%), 2.87 Å (13.0%), 2.45 Å (14.9%), 2.42 Å (20.7%), 2.41 Å (11.1%), 2.18 Å (13.0%), 2.14 Å (20.7%), 1.94 Å (10.9%), 1.89 Å (16.0%), the values in brackets representing the relative intensity of the respective reflection.

The shape of N₂-isotherm of the catalyst corresponded to a material with a mean BJH pore diameter (4V/A) of 113 Å and BET surface area of 149 m²/g, with a N₂ pore volume of 0.26 ml/g for pore diameters in the range from 2 to 200 nm

### Catalyst H

20 g of Catalyst A prepared as above were suspended in 55 ml isopropanol, followed by addition of 58 ml 0.1M HCl and 58 ml 0.1M HBr, the suspension was stirred for 1 h at 60°C, and the catalyst was isolated by filtration. The solids were reslurried in 300 ml isopropanol and again isolated by filtration. This washing procedure was repeated three times.

Before elemental analysis, the catalyst was dried for 16 h at 60°C under reduced pressure, losing 59.9% of its mass in the process. According to elemental analysis, the dried catalyst contained 28.0 wt.% Zn, 0.77 wt.% Cl and 0.4 wt.% Br. These results suggest that probably not all the acetate groups were substituted by Cl atoms and, deduced from the Zn:Cl:Br ratio, the catalyst composition is close to the formula

Zn₃[Co(CN)₆]₂*[Zn(OAc)₂]_{0.87}*(ZnCl₂)_{0.1}*(ZnBr₂)_{0.03}*xH₂O*Y *i*PrOH

The XRD pattern of the undried catalyst displayed reflections mainly occurring at d-values of 2.47 Å (9.7%), 2.44 Å (40.4%), 2.42 Å (14.7%), 2.39 Å (12.4%), 2.37 Å (31.3%), 2.32 Å (11.4%), 2.22 Å (32.1%), 2.14 Å (30.7%), 2.12 Å (14.2%), 2.08 Å (15.3%), 1.96 Å (17%), 1.93 Å (9.3%), 1.90 Å (12.5%), 1.87 Å (9.3%), 1.71 Å (13.3%), 1.70 Å (12.3%), 1.66 Å (10.4%), 1.58 Å (11.7%), 1.54 Å (10%), 1.39 Å (9%), the values in brackets representing the relative intensity of the respective reflection.

### Polymerisation examples:

### Examples 1-15

A 300 ml autoclave was charged with 40 g of PPG (OH# = 100, F = 1.98) and 50-83 ppm, relative to the total amount of polyol product, of one of the DMC catalysts A-H, as shown in Table 1. The reactor was heated to 130°C and flushed twice with nitrogen. Then the reaction mixture was vacuum dried for 30 minutes and 4.8 ml of propylene oxide were added. The time required for activation of the catalyst (induction period) is also shown in Table 1. After reaching constant pressure, the temperature was decreased to 100°C and another 145.8 ml of PO were added. After completion of the polymerisation, the reaction mixture was vacuum stripped for 30 minutes and the reactor was drained. About 180 g of product were obtained in each successful experiment. The OH numbers and viscosities of the products obtained are summarized in Table 1.

The viscosity of the polyols obtained was measured at 25°C using a rotation vicosimeter Rheotec RC 20 with spindle CC 25 DIN (diameter: 12,5 mm; internal diameter oft the measuring cylinder: 13,56 mm) at a shearing rate of 50 s⁻¹.

**Table 1 (summary of polymerization examples 1-15).**

| Catalyst / Example | Catalyst load [ppm] | Induction period [min] | OH# [mg KOH/g] | Viscosity [mPas] |
|---|---|---|---|---|
| A / 1* | 70 | 2 | 22.9 | 3,541 |
| A / 2* | 50 | 2 | 23.2 | 5,326 |
| B / 3* | 70 | No reaction | | |
| C / 4 | 70 | 4 | 23.7 | 1,520 |
| C / 5 | 62 | 14 | 26.2 | 1,554 |
| D / 6 | 83 | 5 | 23.2 | 1,896 |
| D / 7 | 50 | 5 | 22.8 | 2,590 |
| E / 8 | 83 | 4 | 23.7 | 1,468 |
| E / 9 | 62 | 2 | 23.3 | 1,817 |
| F / 10 | 70 | 4 | 23.6 | 1,467 |
| F / 11 | 50 | 7 | 22.5 | 2,040 |
| G / 12 | 76 | 12 | 23.6 | 1,418 |
| G / 13 | 58 | 12 | 24.3 | 1,454 |
| H / 14 | 70 | 3 | 23.3 | 1,605 |
| H / 15 | 50 | 2 | 22.4 | 2,531 |

| | | | | |
|---|---|---|---|---|
| * Comparative Example | | | | |

## Claims

1. A method for preparing a DMC catalyst, comprising treating a first crystalline DMC catalyst having the formula Zn₃[Co(CN)₆]₂*Zn(OAc)₂*nH₂O with a Brønsted acid selected from the group consisting of hydrochloric acid, hydrobromic acid, nitric acid, and mixtures thereof in the presence of an organic ligand which is isopropanol.

2. A crystalline DMC catalyst obtainable by the process of claim 1.

3. The catalyst of claim 2 corresponding to the formula
Zn₃[Co(CN)₆]₂*[*a*Zn(OAc)₂**b*ZnX¹ₓ**c*ZnX²_{y}**d*ZnX³₂]*L**n*H₂O
wherein
L is isopropanol;
X is selected from the group consisting of chloride, bromide, and nitrate;
a, b, c, d, and n are integers or fractions greater than or equal to zero, with the proviso that a is greater than zero and at least one of b, c, and d is different from zero; or at least two of b, c, and d are greater than zero;
x, y and z are chosen so that the compound is electrically neutral.

4. The DMC catalyst of claim 2, crystallizing in the hexagonal crystal system.

5. The DMC catalyst of claim 2, showing in its XRD diagram reflections corresponding to d-values of 6.3±0.1 Å, 5.9±0.1 Å, 4.7±0.1 Å, 3.8±0.1 Å, 3.0±0.1 Å, 2.8±0.1 Å, 2.4±0.1 Å, 2.3±0.1 Å.

6. The DMC catalyst of claim 2, showing in its XRD diagram reflections corresponding to d-values of 17.2±0.1 Å, 15.4±0.1 Å, 5.7±0.1 Å, 4.7±0.1 Å, 4.4±0.1 Å, 3.9±0.1 Å, 3.8±0.1 Å, 3.0±0.1 Å, 2.3±0.1 Å.

7. The DMC catalyst of claim 2, showing in its XRD diagram reflections corresponding to d-values of 17.5±0.1 Å, 16.7±0.1 Å, 5.3±0.1 Å, 4.6±0.1 Å, 4.4±0.1 Å, 3.8±0.1 Å, 2.4±0.1 Å

8. The DMC catalyst of any one of claims 2 to 7, having a zinc content of 26 to 32 wt.-%.

9. The DMC catalyst of any one of claims 2 to 8, having a molar ratio zinc/cobalt of from 1.7 to 2.3.

10. The DMC catalyst of any one of claims 2 to 9, having a specific area, determined via nitrogen sorption (N₂-isotherm) according to DIN 66134, in the range of from 100 m²/g to 800 m²/g.

11. The DMC catalyst of any one of claims 2 to 10, having a mean BJH pore diameter (4V/A), determined via nitrogen sorption (N₂-isotherm) according to DIN 66134, in the range of from 10 Å to 150 Å.

12. The DMC catalyst of any one of claims 2 to 11, having a N₂ pore volume, determined via nitrogen sorption (N₂-isotherm) according to DIN 66134, in the range of from 0.035 to 0.26 ml/g for pore diameters in the range of from 2 to 200 nm.

13. Use of a DMC catalyst according to any one of claims 2 to 12 in the polymerisation of epoxides; or the copolymerisation of epoxides with lactones, anhydrides, or carbon dioxide; or in the production of polyether polyols.

## Patentansprüche

1. Verfahren zur Herstellung eines DMC-Katalysators, bei dem man einen ersten kristallinen DMC-Katalysator mit der Formel Zn₃[Co(CN)_{6]2}*Zn(OAc)₂*nH₂O in Gegenwart eines organischen Liganden, bei dem es sich um Isopropanol handelt, mit einer Brönsted-Säure aus der Gruppe bestehend aus Chlorwasserstoffsäure, Bromwasserstoffsäure, Salpetersäure und Mischungen davon behandelt.

2. Kristalliner DMC-Katalysator, der durch das Verfahren nach Anspruch 1 erhältlich ist.

3. Katalysator nach Anspruch 2, der der Formel
Zn₃[Co(CN)₆]₂*[*a*Zn (OAc)₂**b*ZnX¹ₓ**c*ZnX²_{y}**d*ZnX³_{z}]*L*/*n*H₂O
entspricht, wobei
L für Isopropanol steht;
X aus der Gruppe bestehend aus Chlorid, Bromid und Nitrat ausgewählt ist;
a, b, c, d und n für ganze Zahlen oder Brüche größer gleich null stehen, mit der Maßgabe, dass a größer als null ist und mindestens eine der Variablen b, c und d von null verschieden ist oder mindestens zwei der Variablen b, c und d größer als null sind;
x, y und z so gewählt sind, dass die Verbindung elektrisch neutral ist.

4. DMC-Katalysator nach Anspruch 2, der im hexagonalen Kristallsystem kristallisiert.

5. DMC-Katalysator nach Anspruch 2, der in seinem XRD-Diagramm Reflexe zeigt, die d-Werten von 6,3±0,1 Å, 5,9±0,1 Å, 4,7±0,1 Å, 3,8±0,1 Å, 3,0±0,1 Å, 2,8±0,1 Å, 2,4±0,1 Å, 2,3±0,1 Å entsprechen.

6. DMC-Katalysator nach Anspruch 2, der in seinem XRD-Diagramm Reflexe zeigt, die d-Werten von 17,2±0,1 Å, 15,4±0,1 Å, 5,7±0,1 Å, 4,7±0,1 Å, 4,4±0,1 Å, 3,9±0,1 Å, 3,8±0,1 Å, 3,0±0,1 Å, 2,3±0,1 Å entsprechen.

7. DMC-Katalysator nach Anspruch 2, der in seinem XRD-Diagramm Reflexe zeigt, die d-Werten von 17,5±0,1 Å, 16, 7±0,1 Å, 5,3±0,1 Å, 4,6±0,1 Å, 4,4±0,1 Å, 3,8±0,1 Å, 2,4±0,1 Å entsprechen.

8. DMC-Katalysator nach einem der Ansprüche 2 bis 7 mit einem Zinkgehalt von 26 bis 32 Gew.-%.

9. DMC-Katalysator nach einem der Ansprüche 2 bis 8 mit einem Zink/Cobalt-Molverhältnis von 1,7 bis 2,3.

10. DMC-Katalysator nach einem der Ansprüche 2 bis 9 mit einer durch Stickstoffdesorption (N₂-Isotherme) gemäß DIN 66134 bestimmten spezifischen Oberfläche im Bereich von 100 m²/g bis 800 m²/g.

11. DMC-Katalysator nach einem der Ansprüche 2 bis 10 mit einem durch Stickstoffdesorption (N₂-Isotherme) gemäß DIN 66134 bestimmten mittleren BJH-Porendurchmesser (4V/A) im Bereich von 10 Å bis 150 Å.

12. DMC-Katalysator nach einem der Ansprüche 2 bis 11 mit einem durch Stickstoffdesorption (N₂-Isotherme) gemäß DIN 66134 bestimmten N₂-Porenvolumen im Bereich von 0,035 bis 0,26 ml/g für Porendurchmesser im Bereich von 2 bis 200 nm.

13. Verwendung eines DMC-Katalysators nach einem der Ansprüche 2 bis 12 bei der Polymerisation von Epoxiden oder der Copolymerisation von Epoxiden mit Lactonen, Anhydriden oder Kohlendioxid oder bei der Herstellung vom Polyetherpolyolen.

## Revendications

1. Procédé de préparation d'un catalyseur DMC, comprenant le traitement d'un premier catalyseur DMC cristallin ayant la formule Zn₃[Co(CN)₆]₂*Zn(OAc)₂*-nH₂O avec un acide de Brønsted choisi dans le groupe constitué par l'acide chlorhydrique, l'acide bromhydrique, l'acide nitrique et les mélanges de ceux-ci en présence d'un ligand organique qui est l'isopropanol.

2. Catalyseur DMC cristallin pouvant être obtenu par le procédé de la revendication 1.

3. Catalyseur de la revendication 2 correspondant à la formule
Zn₃[Co(CN)₆]₂*[*a*Zn(OAc)₂**b*ZnX¹ₓ**c*ZnX²_{y}**d*ZnX³_{z}]*L**n*H₂O
dans laquelle
L est l'isopropanol ;
X est choisi dans le groupe constitué par le chlorure, le bromure, et le nitrate ;
a, b, c, d et n sont des entiers ou fractions supérieurs ou égaux à zéro, à condition que a soit supérieur à zéro et au moins un de b, c et d soit différent de zéro ; ou au moins deux de b, c et d soient supérieurs à zéro ;
x, y et z sont choisis de telle sorte que le composé est électriquement neutre.

4. Catalyseur DMC de la revendication 2, cristallisant dans le système cristallin hexagonal.

5. Catalyseur DMC de la revendication 2, présentant dans son diagramme de DRX des réflexions correspondant à des valeurs d de 6,3±0,1 Å, 5,9±0,1 Å, 4,7±0,1 Å, 3, 8±0,1 Å, 3,0±0,1 Å, 2,8±0,1 Å, 2,4±0,1 Å, 2,3±0,1 Å.

6. Catalyseur DMC de la revendication 2, présentant dans son diagramme de DRX des réflexions correspondant à des valeurs d de 17,2±0,1 Å, 15,4±0,1 Å, 5,7±0,1 Å, 4,7±0,1 Å, 4,4±0,1 Å, 3,9+0,1 Å, 3,8+0,1 Å, 3,0+0,1 Å, 2,3±0,1 Å.

7. Catalyseur DMC de la revendication 2, présentant dans son diagramme de DRX des réflexions correspondant à des valeurs d de 17,5±0,1 Å, 16,7±0,1 Å, 5,3±0,1 Å, 4,6±0,1 Å, 4,4±0,1 Å, 3,8±0,1 Å, 2,4±0,1 Å.

8. Catalyseur DMC de l'une quelconque des revendications 2 à 7, ayant une teneur en zinc de 26 à 32 % en poids.

9. Catalyseur DMC de l'une quelconque des revendications 2 à 8, ayant un rapport molaire zinc/cobalt de 1,7 à 2,3.

10. Catalyseur DMC de l'une quelconque des revendications 2 à 9, ayant une surface spécifique, déterminée par sorption d'azote (isotherme de N₂) selon la norme DIN 66134, dans la gamme de 100 m²/g à 800 m²/g.

11. Catalyseur DMC de l'une quelconque des revendications 2 à 10, ayant un diamètre moyen de pores BJH (4V/A), déterminé par sorption d'azote (isotherme de N₂) selon la norme DIN 66134, dans la gamme de 10 Â à 150 Â.

12. Catalyseur DMC de l'une quelconque des revendications 2 à 11, ayant un volume de pores au N₂, déterminé par sorption d'azote (isotherme de N₂) selon la norme DIN 66134, dans la gamme de 0,035 à 0,26 ml/g pour des diamètres de pores dans la gamme de 2 à 200 nm.

13. Utilisation d'un catalyseur DMC selon l'une quelconque des revendications 2 à 12 dans la polymérisation d'époxydes ; ou la copolymérisation d'époxydes avec des lactones, des anhydrides, ou du dioxyde de carbone ; ou dans la production de polyols de polyéther.
